# EUROPÄISCHE PATENTSCHRIFT

(11) **EP 2 783 233 B1**
(45) Veröffentlichungstag und Bekanntmachung des Hinweises auf die Patenterteilung: **22.05.2019**
(21) Anmeldenummer: 12797804.7
(22) Anmeldetag: 21.11.2012
(51) Int. Cl.: G01S 13/00, G01S 13/93, G08G 1/16

(54) **VERFAHREN UND VORRICHTUNG ZUR KOMMUNIKATIONSSIGNALBASIERTEN POSITIONSERMITTLUNG VON OBJEKTEN IM STRASSENVERKEHR SOWIE VERWENDUNG DER VORRICHTUNG**
METHOD AND DEVICE FOR THE POSITION DETERMINATION OF OBJECTS IN ROAD TRAFFIC, BASED ON COMMUNICATION SIGNALS, AND USE OF THE DEVICE
PROCÉDÉ ET DISPOSITIF POUR DÉTERMINER LA POSITION D'OBJETS DANS LA CIRCULATION ROUTIÈRE SUR LA BASE DE SIGNAUX DE COMMUNICATION ET UTILISATION DE CE DISPOSITIF

(30) Priorität: 21.11.2011 DE 102011086697
(43) Veröffentlichungstag der Anmeldung: 01.10.2014
(73) Patentinhaber: Continental Teves AG & Co. OHG, 60488 Frankfurt am Main (DE)
(72) Erfinder: Sschräbler, Sighard, 61184 Karben (DE); Stählin, Ulrich, 65760 Eschborn (DE); Menzel, Marc, 35096 Weimar/Lahn (DE)
(86) Internationale Anmeldenummer: PCT/EP2012/073217
(87) Internationale Veröffentlichungsnummer: WO 2013/076132

(56) Entgegenhaltungen:
- US-A1- 2002 053 982
- US-A1- 2006 238 407
- US-B1- 7 205 933
- US-B2- 6 930 638
- JOO-HAN SONG ET AL: "Secure Location Verification for Vehicular Ad-Hoc Networks", GLOBAL TELECOMMUNICATIONS CONFERENCE, 2008. IEEE GLOBECOM 2008. IEEE, IEEE, PISCATAWAY, NJ, USA, 30. November 2008 (2008-11-30), Seiten 1-5, XP031369843, ISBN: 978-1-4244-2324-8

## Beschreibung

Die Erfindung betrifft ein Verfahren zur kommunikationssignalbasierten Positionsermittlung von Objekten im Straßenverkehr gemäß Oberbegriff von Anspruch 1 und eine Vorrichtung zur kommunikationssignalbasierten Positionsermittlung von Objekten im Straßenverkehr gemäß Oberbegriff von Anspruch 20 sowie deren Verwendung.

Im Stand der Technik ist bereits eine Vielzahl unterschiedlicher Sensorvorrichtungen zur Umfelderfassung bekannt. Beispiele für zur Umfelderfassung geeignete und übliche Sensoren sind etwa Mono- oder Stereokameravorrichtungen, Radarvorrichtungen und Ultraschallvorrichtungen. Ebenso ist es bekannt, über drahtlos übertragende Fahrzeug-zu-X-Kommunikationsvorrichtungen Informationen über die Fahrzeugumgebung nicht nur zu erhalten sondern auch zu versenden. Insgesamt zeichnet sich eine schnelle und deutliche Entwicklung zu immer mehr und immer zuverlässigeren Fahrzeugsystemen ab, welche zur Informationserfassung über eine Vielzahl von unterschiedlichen Vorrichtungen befähigt sind. Je unterschiedlicher dabei die Wirkprinzipien dieser Vorrichtungen sind, desto besser sind die von einem gemeinsamen Fahrzeugsystem umfassten Vorrichtungen geeignet, die jeweils erfassten Informationen untereinander zu validieren.

In diesem Zusammenhang beschreibt die DE 10 2008 061 304 A1 eine Fahrzeug-zu-X-Kommunikationseinrichtung für ein Fahrzeug zum drahtlosen Übertragen von fahrzeugrelevanten Daten. Diese Daten werden dabei an Umgebungsfahrzeuge oder an Infrastruktureinrichtungen übertragen. Die beschriebene Kommunikationseinrichtung umfasst zwei getrennte Kommunikationseinheiten, wobei die erste Kommunikationseinheit auf der Basis einer WLAN-Verbindung und die zweite Kommunikationseinheit auf Basis einer Remote Keyless Entry (RKE)-Verbindung ausgeführt ist.

Die DE 10 2007 048 809 A1 beschreibt ein Verfahren und eine Vorrichtung zur Erkennung von verdeckten Objekten im Straßenverkehr. Dabei wird die Umgebung eines Fahrzeugs zunächst mittels Sensoren erfasst und entsprechende Informationen werden anschließend mittels einer Schnittstelle zur Fahrzeug-zu-Fahrzeug-Kommunikation an im Umfeld befindliche Fahrzeuge übertragen. Die übertragenen Informationen werden von den Umgebungsfahrzeugen empfangen und von diesen dazu verwendet, ein Umfeldmodell zu erweitern, so dass das Umfeldmodell auch Informationen über Objekt umfasst, welche vom jeweiligen Umgebungsfahrzeug selbst nicht erfasst werden können. Weiterhin werden eine Situationsanalyse des solcherart erweiterten Umfeldmodells sowie eine Bewertung der Situation des eigenen Fahrzeugs durchgeführt.

Aus der DE 10 2007 058 192 A1 ist ein zentrales Steuergerät für mehrere in einem Kraftfahrzeug vorgesehene Assistenzsysteme bekannt, welche zumindest teilweise mit Umfeldsensoren ausgestattet sind, wobei gemäß der DE 10 2007 058 192 A1 auch ein Telematiksystem als Umfeldsensor verstanden wird. Das zentrale Steuergerät ist auf Datenebene mit den einzelnen Assistenzsystemen verbunden und plausibilisiert die Informationen einzelner Umfeldsensoren mittels der Informationen anderer Umfeldsensoren. Z.B. kann die Bildinformation einer Kamera die Abstandsmessung eines Radarsensors bestätigen. Einzelne Sensorinformationen können somit bestätigt werden und liegen redundant vor. Eine derartige Kopplung von Einzelsignalen verschiedener Sensoren ist auch als Sensorfusion bekannt.

Nachteilig bei den aus dem Stand der Technik bekannten Verfahren und Vorrichtungen ist es jedoch, dass zur zuverlässigen und insbesondere redundanten Erfassung von Objekten eine Vielzahl unterschiedlicher Sensoren verschiedener Sensorgattungen notwendig ist, was wiederum mit einem vergleichsweise hohen Kostenaufwand verbunden ist. Sofern Informationen über ein Objekt mittels Fahrzeug-zu-X-Kommunikation erfasst werden, besteht in der Regel außerdem die Notwendigkeit, diese vor einer Verarbeitung und insbesondere vor einer Verwendung in einem sicherheitsrelevanten Assistenzsystem einem rechenaufwändigen Authentizitätsverfahren zu unterziehen oder mittels Umfeldsensorinformationen zu validieren, da ein böswilliger Absender bewusst falsche Informationen senden kann.

Weiterer themenverwandter Stand der Technik ist nachfolgend beschrieben.

US 6,930,638 B2 offenbart ein Lokalisierungssystem für Mobil-telefone anhand von zwei Antennen, wobei die erste Antenne ein direktes und die zweite Antenne ein reflektiertes Signal empfängt.

US 2002/053982 A1 offenbart ein passives Lokalisierungssystem für die zivile Luftfahrt, die aufgrund direkter oder reflektierter Signale von Objekten eine Lokalisierung eines Objektes durchführt.

US 2006/238407 A1 offenbart ein Echtzeitverfahren anhand eines Signalprozesses, das mittels Signale von einem multistatischen Radarsystem Objekte lokalisiert, verfolgt und klassifiziert.

US 7,205,933 B1 offenbart ein Lokalisierungssystem aus dem Militärbereich wonach feindliche Objekte durch Auswertung von reflektierten Multipath-Signalen und externen Daten erkannt werden.

Einen weiteren Stand der Technik stellt der Artikel von JOO-HAN SONG et al. "Secure Location Verification for Vehicular Ad-Hoc Networks" in der IEEE GLOBECOM 2008. IEEE, IEEE, PISCATAWAY, NJ, USA, 30. November 2008, Seiten 1-5 (XP031369843, ISBN: 978-1-4244-2324-8) dar.

Der Erfindung liegt daher die Aufgabe zugrunde, ein Verfahren vorzuschlagen, welches unter Vermeidung von Informationseinbußen und Sicherheitseinbußen die gemäß dem Stand der Technik benötigte Sensorvielzahl zu reduzieren hilft.

Diese Aufgabe wird erfindungsgemäß durch das Verfahren zur kommunikationssignalbasierten Positionsermittlung von Objekten im Straßenverkehr gemäß Anspruch 1 gelöst.

Gemäß dem erfindungsgemäßen Verfahren zur kommunikationssignalbasierten Positionsermittlung von Objekten im Straßenverkehr, bei welchem mindestens ein Daten transportierendes Kommunikationssignal von mindestens einem Absender kabellos gesendet wird, wobei das mindestens eine Kommunikationssignal an mindestens einem Objekt zumindest anteilig als Reflektionssignal reflektiert wird und wobei von einem Empfänger das mindestens eine Kommunikationssignal und das Reflektionssignal des mindestens einen Kommunikationssignals empfangen werden, kennt der Empfänger seine Eigenposition und einen Standort des mindestens einen Absenders. Das Verfahren zeichnet sich dadurch aus, dass vom Empfänger eine Laufzeitdifferenz des Kommunikationssignals und des Reflektionssignals des mindestens einen Kommunikationssignals bestimmt, wobei vom Empfänger durch zeitliches Beobachten einer Änderung der Dopplerfrequenz dieser eine relativgeschwindigkeitsabhängige Entfernungskurve zugeordnet wird, deren Verlauf die Position des mindestens einen Objekts enthält.

Die Erfindung bietet somit den Vorteil, dass mittels eines kabellosen Kommunikationssignals bzw. im Rahmen eines kabellosen Kommunikationsvorgangs eine Positionsermittlung von Objekten stattfindet, welche im Ausbreitungsfeld der Kommunikationssignale liegen und diese reflektieren. Da es sich bei Objekten im Straßenverkehr typischerweise um Kraftfahrzeuge handelt, welche aufgrund ihrer metallischen Bauweise über vergleichsweise gute Reflektionseigenschaften hinsichtlich der Kommunikationssignale verfügen, ist auch das Reflektionssignal vergleichsweise stark und gut erfassbar. Somit kann ohne zusätzlichen Sensoraufwand eine Positionsbestimmung der Objekte alleine über die Kommunikationssignale einer geeigneten, kabellos sendenden Kommunikationsvorrichtung erfolgen. Es ist dabei nicht einmal notwendig, dass der Empfänger ebenfalls zum Senden der für die Positionsermittlung genutzten Kommunikationssignale befähigt ist. Die Erfindung zeigt somit ein ebenso kostengünstiges wie effektives Verfahren zur Positionsbestimmung von Objekten.

Zweckmäßigerweise ist es vorgesehen, dass vom Empfänger durch zeitliches Beobachten einer Änderung der Dopplerfrequenz dieser eine relativgeschwindigkeitsabhängige Entfernungskurve zugeordnet wird, deren Verlauf die Position des mindestens einen Objekts enthält. Sofern sowohl der Empfänger als auch der Absender in Bewegung sind, beschreibt die relativgeschwindigkeitsabhängige Entfernungskurve dabei eine geschwungene Linie. Von jedem Punkt dieser Linie aus würde ein auf der Linie befindliches Objekt beim Empfänger eine identische Dopplerfrequenz erzeugen.

Es ist weiterhin vorteilhaft, dass auf das Kommunikationssignal und das Reflektionssignal ein an sich bekanntes Range-Doppler-Verfahren angewandt wird, welches auch beim an sich bekannten, bildgebenden "Synthetic Aperture Radar" und beim ebenfalls an sich bekannten "4D Pulse Doppler Radar" Anwendung findet. Beim Range-Doppler-Verfahren werden empfangene Signale in einer digitalen Karte dargestellt, welche die bestimmte Dopplerfrequenz über der Entfernung des Objekts zum Empfänger enthält.

Über die Laufzeitdifferenz des Kommunikationssignals vom Absender zum Empfänger und des Reflektionssignals vom Absender zum Objekt und vom Objekt zum Empfänger wird erfindungsgemäß bevorzugt zunächst über die bekannte Ausbreitungsgeschwindigkeit des Kommunikationssignals bzw. des Reflektionssignals eine zurückgelegte Wegstreckendifferenz des Kommunikationssignals und des Reflektionssignals bestimmt.

Bevorzugt ist es vorgesehen, dass aus der Laufzeitdifferenz, der Eigenposition und dem Standort eine Ellipse bestimmt wird, deren Umfangslinie eine Position des mindestens einen Objekts enthält. Da dem Empfänger sowohl seine Eigenposition als auch der Standort des Absenders bekannt sind, kann er zunächst die Wegstrecke vom Absender zum Empfänger bestimmen. Somit kann über die bekannte Wegstrecke vom Absender zum Empfänger und die sich aus der Laufzeitdifferenz ergebende Wegstreckendifferenz auch die absolute Wegstrecke vom Absender über das Objekt zum Empfänger bestimmt werden. Der Empfänger bestimmt somit also prinzipbedingt eine Ellipse, auf deren Umfangslinie sich das Objekt befinden muss und in deren einem Brennpunkt sich der Absender und in deren anderem Brennpunkt sich der Empfänger befindet.

Die Positionsermittlung erfolgt prinzipbedingt in alle Richtungen um den Empfänger herum und ist im Gegensatz zu üblicherweise verwendeten Umfeldsensoren nicht auf einen Raumausschnittsbereich beschränkt. Die einzige mögliche Einschränkung des Erfassungsbereichs besteht in Abschattungen der zum Empfang genutzten Antenne oder Antennen einer das Kommunikationssignal bzw. Reflektionssignal empfangenden Kommunikationsvorrichtung gegen bestimmte Raumrichtungen, z.B. durch bauliche Designvorgaben der Kommunikationsvorrichtung. Dies stellt jedoch einen Sonderfall dar und kann durch eine entsprechende Anordnung der Antenne oder auch mehrerer Antennen vermieden werden, so dass tatsächlich eine Positionsermittlung in einem Erfassungswinkel von 360° um den Empfänger herum möglich ist.

Da jedes Objekt zum Entstehen einer Ellipse führt, kann hieraus z.B. auch eine simple Klassifizierung des Umfelds des Empfängers erfolgen, welche zumindest angibt, ob sich viele oder wenige Objekte im Umfeld des Empfängers befinden. Zusätzliche Ellipsen, die durch zusätzliche Absender entstehen, können durch Abgleich der empfangenen Kommunikationssignale bzw. Reflektionssignale erkannt werden, so dass eine Vielzahl von Absendern nicht zu einer falschen Klassifizierung führt.

Es ist vorgesehen, dass vom Empfänger aus dem mindestens einen Kommunikationssignal und dem Reflektionssignal des mindestens einen Kommunikationssignals eine durch eine Relativbewegung des Objekts zu einer Basislinie zwischen dem Empfänger und dem Absender erzeugte Dopplerfrequenz bestimmt wird. Die Dopplerfrequenz entsteht dabei alleine aus der Relativbewegung des Objekts zur Basislinie und kann durch Abgleichen der Frequenzen des Kommunikationssignals mit dem Reflektionssignal ermittelt werden. Die Dopplerfrequenz ist dabei proportional zur Geschwindigkeit des Objekts in Richtung der Basislinie. Somit können über die Dopplerfrequenz zusätzliche Informationen über ein Objekt erfasst werden.

Vorzugsweise zeichnet sich das Verfahren dadurch aus, dass die mindestens eine Dopplerfrequenz durch Mischen des mindestens einen Kommunikationssignals mit dem zugehörigen Reflektionssignal bestimmt wird. Dies stellt eine unaufwändige und effiziente Möglichkeit zur Bestimmung der Dopplerfrequenz dar. Durch das Mischen erhält der Empfänger die Differenzfrequenz zwischen der Frequenz des Kommunikationssignals und der Frequenz des Reflektionssignals. Diese Differenzfrequenz entspricht der Dopplerfrequenz. Besonders bevorzugt wird das Mischen mittels einer komplex konjugierten Multiplikation umgesetzt, da dies vergleichsweise besonders wenig elektronischen Rechenaufwand erfordert und somit auch mit vergleichsweise kostengünstigen Rechenmodulen problemlos möglich ist. Alternativ besonders bevorzugt wird eine sogenannte programmierbare Hardware (FPGA, field programmable gate array) oder eine sogenannte anwendungsspezifisch integrierte Schaltung (ASIC, application sopecific integrated circuit) herangezogen. Auch eine Kombination des Mischverfahrens über die komplex konjugierte Multiplikation und das Heranziehen von programmierbare Hardware oder anwendungsspezifisch integrierten Schaltungen ist möglich.

Gemäß einer weiteren bevorzugten Ausführungsform der Erfindung ist es vorgesehen, dass die Dopplerfrequenz mittels eines Tiefpasses, insbesondere mittels eines digitalen Tiefpasses, gefiltert wird. Dies bewirkt, dass - abhängig von der Auslegung des Tiefpasses - Dopplerfrequenzen, welche eine bestimmte Grenzfrequenz überschreiten, gefiltert und nicht zur weiteren Auswertung herangezogen werden. Gemäß einer besonders bevorzugten Ausführungsform ist der Tiefpass derart ausgelegt, dass durch Differenzgeschwindigkeiten von über 400 km/h erzeugte Dopplerfrequenzen gefiltert werden.

Insbesondere folgt auf die digitale Tiefpassfilterung eine an sich bekannte Unterabtastung der empfangenen Signale. Dadurch verringert sich der Rechenaufwand für die jeweils nachfolgende schnelle Fouriertransformation erheblich. Bevorzugt werden nur unaufwändige schnelle Fouriertransformationen gerechnet, da mit geringen Dopplerfrequenzen zu rechnen ist (aufgrund üblicherweise geringerer Differenzgeschwindigkeiten als 400 km/h). Durch das Rechnen mit derart geringen Dopplerfrequenzen ergeben sich auch entsprechend verkürzte Latenzzeiten. Dies ist bei einer Verkehrsortung von Vorteil, da stets aktuelle Daten über Zielobjekte benötigt werden. Die in diesem Zusammenhang tolerierbaren Latenzzeiten sind bevorzugt kürzer als 250 ms.

Bei einigen gängigen drahtlosen Kommunikationstechniken kann zudem der Fall auftreten, dass ein Kommunikationssignal bzw. Reflektionssignal bzw. ein einzelnes Kommunikationspaket zeitlich zu kurz ist, um die Dopplerfrequenz direkt zu bestimmen, da nicht genügend Nulldurchgänge auftreten. In diesem Fall wird die Dopplerfrequenz bevorzugt aus der Phasenlage des Kommunikationssignals bzw. des Reflektionssignals bzw. des Kommunikationspakets ermittelt, indem die Phasenlage jeweils am Anfang und am Ende des Kommunikationssignals bzw. des Reflektionssignals bzw. des Kommunikationspakets erfasst wird und z.B. mittels linearer Extrapolation fortgeschrieben wird, so dass anschließend aus der Extrapolation die Dopplerfrequenz bestimmt werden kann.

Sofern insbesondere sowohl der Absender als auch der Empfänger in Ruhe sind, stellt die relativgeschwindigkeitsabhängige Entfernungskurve im Wesentlichen eine zweimal abknickende Gerade dar, deren erstes Abknicken am Ort des Empfängers und deren zweites Abknicken am Ort des Absenders ist. Der Empfänger und der Absender selbst sind dabei folglich durch die Gerade geradlinig verbunden. Durch eine auftretende Doppeldeutigkeit gabelt sich die Gerade sowohl am Ort des Empfängers als auch am Ort des Absenders auf, wodurch letztendlich jeweils zwei Geraden vom Ort des Empfängers in die dem Absender abgewandte Richtung als auch vom Ort des Absenders in die dem Empfänger abgewandte Richtung ausgehen.

Die derart bestimmte relativgeschwindigkeitsabhängige Entfernungskurve kann der zuvor bestimmten Ellipse überlagert werden. Die relativgeschwindigkeitsabhängige Entfernungskurve und die Ellipse schneiden sich dabei an maximal vier verschiedenen Stellen. An einer dieser Stellen befindet sich das Objekt, dessen Position ermittelt werden soll. Durch diese Eingrenzung der Aufenthaltsmöglichkeiten kann die Positionsermittlung des Objekts weiter verbessert werden.

Insbesondere ist es zweckmäßigerweise vorgesehen, dass die Änderung der Dopplerfrequenz mittels einer schnellen Fouriertransformation der relativgeschwindigkeitsabhängigen Entfernungskurve zugeordnet wird. Die schnelle Fouriertransformation hat sich in diesem Zusammenhang als besonders geeignet erwiesen.

Weiterhin ist es bevorzugt, dass auch der Empfänger zum Senden von Daten transportierenden Kommunikationssignalen befähigt ist. Daraus ergibt sich der Vorteil, dass auch der Empfänger selbst Kommunikationssignale senden kann und somit für andere Empfänger, z.B. andere Fahrzeuge, in seiner Umgebung als Absender im Sinne der Erfindung genutzt werden kann. Somit können die anderen Empfänger über die Kommunikationssignale und die zugehörigen Reflektionssignale ebenfalls eine Positionsermittlung über das erfindungsgemäße Verfahren vornehmen können.

Bevorzugt wird die bereits beschriebene Tiefpassfilterung kontinuierlich auf die bestimmte Dopplerfrequenz angewandt, während die schnelle Fouriertransformation anlassbezogen bevorzugt mit ein bis zehn Rechenschritten pro Sekunde ausgeführt wird.

Außerdem ist es vorteilhaft, dass bei einer Vielzahl von Absendern und einer Vielzahl von Kommunikationssignalen, welche am mindestens einen Objekt jeweils zumindest anteilig als eine Vielzahl von Reflektionssignalen reflektiert werden, vom Empfänger jeweils ein Vielzahl von Laufzeitdifferenzen aus der Vielzahl von Kommunikationssignalen und den zugehörigen Reflektionssignalen bestimmt wird. Somit kann das erfindungsgemäße Verfahren voreilhaft auch bei einer Vielzahl von unterschiedlichen Absendern zur Anwendung kommen. Es ist hierbei wichtig, jedem Kommunikationssignal das zugehörige Reflektionssignal zuzuordnen. In der Regel ist die über die Sendefrequenz des Kommunikationssignals und des Reflektionssignals auch einfache Weise möglich.

Insbesondere ist es vorteilhaft, dass vom Empfänger aus der Vielzahl von Laufzeitdifferenzen eine Vielzahl von Ellipsen bestimmt wird, wobei mindestens ein Schnittpunkt der Vielzahl von Ellipsen die Position des mindestens einen Objekts enthält. Somit wird also eine Vielzahl von Ellipsen bestimmt, in deren einem Brennpunkt sich jeweils der Empfänger und in deren anderem Brennpunkt sich jeweils einer der Absender befindet. Die Ellipsen erzeugen also zwangsläufig Schnittpunkte, wobei sich das Objekt an einem der Schnittpunkte befindet. Über eine zeitliche Beobachtung und eine Beobachtung der räumlichen Verschiebung der Schnittpunkte kann die tatsächliche Position des Objekts weiter eingegrenzt werden und die Positionsermittlung weiter verbessert werden. Die Beobachtung der räumlichen Verschiebung kann z.B. in Form einer Zielverfolgung erfolgen, welche physikalisch unmögliche Veränderungen aussortiert.

Sofern sich eine Vielzahl von Objekten in der Umgebung des Empfängers befindet, so erzeugt jeder Absender mittels jedes zusätzlichen Objekts eine zusätzliche Ellipse.

Außerdem ist es besonders vorteilhaft, dass das Verfahren von einer Vielzahl von Empfängern ausgeführt wird, wobei die Empfänger mittels der Kommunikationssignale untereinander die Schnittpunkte beschreibende Daten austauschen. Somit ergibt sich der Vorteil, dass jeder Empfänger von den anderen Empfängern in seiner Umgebung bzw. in Empfangsreichweite zusätzliche Informationen erhält, welche ihm eine zusätzliche Positionsermittlung von zusätzlichen Objekten ermöglicht bzw. eine verbesserte Positionsermittlung von bereits erfassten Objekten ermöglicht. Die verbesserte Positionsermittlung ergibt sich insbesondere aus den unterschiedlichen Positionen der Vielzahl von Empfängern, da diese in unterschiedlichen Brennpunkten unterschiedlicher Ellipsen liegen. Da ein Schnittpunkt sozusagen also von unterschiedlichen Richtungen betrachtet wird, kann dessen Position mittels Triangulation genauer bestimmt werden.

Weiterhin ist es zweckmäßig, dass vom Empfänger aus der Vielzahl von Kommunikationssignalen und der Vielzahl von Reflektionssignalen durch eine Vielzahl von Relativbewegungen einer Vielzahl von Objekten zu einer Basislinie zwischen dem Empfänger und dem Absender eine Vielzahl von erzeugten Dopplerfrequenzen bestimmt wird. Der Empfänger bestimmt also für jedes Objekt eine eigene, dem Objekt zugeordnete Dopplerfrequenz.

Auch in diesem Fall werden die Dopplerfrequenzen bevorzugt mittels eines Tiefpasses gefiltert, um den nachfolgenden elektronischen Rechenaufwand sinnvoll begrenzt zu halten.

Insbesondere ist es weiterhin zweckmäßig, dass vom Empfänger durch zeitliches Beobachten von Änderungen der Vielzahl von Dopplerfrequenzen der Vielzahl von Dopplerfrequenzen jeweils eine relativgeschwindigkeitsabhängige Entfernungskurve zugeordnet wird, deren Verläufe die Position des mindestens einen Objekts enthalten. Die Zuordnung der Änderung der Dopplerfrequenz zu den relativgeschwindigkeitsabhängigen Entfernungskurven erfolgt bevorzugt mittels schneller Fouriertransformation, welche sich auch in diesem Zusammenhang als besonders geeignet erwiesen hat.

Bevorzugt ist es vorgesehen, dass die mindestens eine relativgeschwindigkeitsabhängige Entfernungskurve und die mindestens eine Ellipse auf einer digitalen Positionskarte überlagert werden, wobei die Schnittpunkte der mindestens einen relativgeschwindigkeitsabhängigen Entfernungskurve und der mindestens einen Ellipse die Position des mindestens einen Objekts enthalten. Durch die Überlagerung der Ellipsen und der relativgeschwindigkeitsabhängigen Entfernungskurven können die tatsächlichen Positionen der Objekte weiter eingegrenzt werden und die Positionsermittlung der Objekte somit verbessert werden.

Insbesondere ist es bevorzugt, dass die mindestens eine relativgeschwindigkeitsabhängige Entfernungskurve einer in digitalem Kartenmaterial enthaltenen Straßenkarte überlagert wird, wobei die mindestens eine Position des mindestens einen Objekts ausschließlich einer in der digitalen Straßenkarte verzeichneten Straße zugeordnet wird. Daraus ergibt sich der Vorteil, dass eine mögliche Position eines Objekts weiter eingegrenzt werden kann, da Positionen, die nicht auf einer in der digitalen Straßenkarte verzeichneten Straße liegen, verworfen werden. Es werden also nur die Positionen für die Positionsermittlung als tatsächliche Position in Betracht gezogen, die auf einer Straße liegen. Da Objekte im Straßenverkehr üblicherweise auf einer Straße liegen, werden somit in der Regel keine Fehlerkennungen verursacht.

Besonders bevorzugt ist es, dass die mindestens eine Ellipse einer in digitalem Kartenmaterial enthaltenen Straßenkarte überlagert wird, wobei die mindestens eine Position des mindestens einen Objekts ausschließlich einer in der digitalen Straßenkarte verzeichneten Straße zugeordnet wird. Indem auch die Ellipsen einer in digitalem Kartenmaterial enthaltenen Straßenkarte überlagert werden, ergibt sich auch hier der Vorteil, dass nur diejenigen Positionen für die Positionsermittlung als tatsächliche Position in Betracht gezogen, die auf einer Straße liegen.

Gemäß einer weiteren bevorzugten Ausführungsform der Erfindung ist es vorgesehen, dass der Standort des mindestens einen Absenders dem digitalen Kartenmaterial entnommen wird. Daraus ergibt sich der Vorteil, dass der Absender nicht regelmäßig seinen Standort über das Kommunikationssignal versenden muss. Stattdessen erkennt der Empfänger den Absender, z.B. einen Radiosender anhand seiner Sendefrequenz, und entnimmt dessen Standort aus dem digitalen Kartenmaterial. Dies vereinfacht und beschleunigt das erfindungsgemäße Verfahren.

Zweckmäßigerweise ist es vorgesehen, dass die in der Vielzahl von Kommunikationssignalen transportierten Daten vom Empfänger zumindest anteilig ausgewertet werden. Daraus ergibt sich der Vorteil, dass ein für gewöhnlich stattfindender Kommunikationsvorgang weiterhin unbeeinflusst und uneingeschränkt ausgeführt werden kann. Das erfindungsgemäße Verfahren führt also zu keinerlei Einschränkung der Kommunikationsfähigkeit des Empfängers.

Außerdem ist es vorteilhaft, dass der Standort des mindestens einen Absenders und/oder des Empfängers in den vom Kommunikationssignal transportierten Daten enthalten ist. Dies ist insbesondere dann von Vorteil, wenn es sich beim Absender um einen mobilen Absender wie z.B. ein zur Fahrzeug-zu-Kommunikation befähigtes Fahrzeug handelt. Außerdem kann im Falle eines stationären Absender, z.B. eines Radio- oder Fernsehsenders, der in den vom Kommunikationssignal transportierten Daten enthaltene Standort mit dem im digitalen Kartenmaterial enthaltenen Standort abgeglichen werden, um diesen zu verifizieren.

Außerdem ist es bevorzugt, dass das mindestens eine Kommunikationssignal ein Kommunikationssignal einer der folgenden Kommunikationsgattungen ist:
- WLAN-Kommunikation, insbesondere nach IEEE 802.11p,
- WiFi-Direct-Kommunikation,
- ISM-Kommunikation (Industrial, Scientific, Medical Band), insbesondere über eine funkverbindungsfähige Schließvorrichtung,
- Bluetooth-Kommunikation,
- ZigBee-Kommunikation,
- UWB-Kommunikation (Ultra Wide Band),
- WiMax-Kommunikation (Worldwide Interoperability for Microwave
   Access),
- Remote-Keyless-Entry-Kommunikation,
- Mobilfunk-Kommunikation, insbesondere GSM-, GPRS-, EDGE-,
- UMTS-Kommunikation,
- LTE-Kommunikation,
- Infrarot-Kommunikation,
- Radio-Kommunikation und
- TV-Kommunikation.

Die mobilfunkbasierten Kommunikationsmittel sind dabei besonders bevorzugt einem automatischen Notruf-Modul zugeordnet. Die aufgeführten Verbindungsarten bieten hinsichtlich ihrer Kommunikationseigenschaften unterschiedliche Vor- und Nachteile, je nach Art, Wellenlänge und verwendetem Datenprotokoll. WLAN-Verbindungen ermöglichen z.B. eine hohe Datenübertragungsrate und einen schnellen Verbindungsaufbau. ISM-Verbindungen bieten hingegen nur eine geringere Datenübertragungsrate, sind aber hervorragend zur Datenübertragung um Sichthindernisse herum geeignet. Infrarotverbindungen wiederum bieten ebenfalls eine geringe Datenübertragungsrate. Mobilfunkverbindungen schließlich werden durch Sichthindernisse nicht beeinträchtigt und bieten eine gute Datenübertragungsrate. Dafür ist der Verbindungsaufbau von Mobilfunkverbindungen jedoch vergleichsweise langsam.

Ein automatisches Notruf-Modul ist auch bekannt als sogenanntes eCall-Modul.

Da es nicht notwendig ist, dass die Kommunikation über die zur Positionsermittlung genutzten Kommunikationsgattungen bidirektional ist, werden im Sinne der Erfindung auch bevorzugt die genannten, üblicherweise monodirektional ausgeführten Kommunikationsgattungen wie Radio-Kommunikation und TV-Kommunikation herangezogen.

Ein weiterer Vorteil beim Heranziehen von feststehenden analogen oder digitalen Sendern, wie z.B. Radio- und Fernsehstationen, ist es, dass der Standort der entsprechenden Sendemasten aus einer Karte entnommen werden kann. In diesem Fall kann besonders einfach auch die Dopplerfrequenz zur Auswertung herangezogen werden, weil sich zumindest der Sender nicht bewegt. Damit kann vergleichsweise einfach eine evtl. Mehrdeutigkeit der Position eines Objekts aufgelöst werden.

Im Allgemeinen wird eine Kommunikationsgattung umso bevorzugter zur Verwendung gemäß der Erfindung herangezogen, je größer ihre mögliche Übertragungsbandbreite ist, da eine größere Bandbreite eine genauere Positionsermittlung ermöglicht.

Des Weiteren ist es bevorzugt, dass die transportierten Daten und/oder die bestimmten Positionen an mindestens ein Fahrerassistenzsystem weitergeführt werden. Somit können sowohl die transportierten Daten als auch die bestimmten Positionen - ggf. auch gemeinsam - von einem entsprechenden Fahrerassistenzsystem verarbeitet und zur Fahrerunterstützung verwendet werden.

Insbesondere ist es bevorzugt, dass die in den transportierten Daten enthaltenen Standortangeben mittels der bestimmten Positionen validiert werden.

Außerdem ist insbesondere bevorzugt, dass das Fahrerassistenzsystem zur Ausführung eines autonomen Bremseneingriffs und/oder eines autonomen Lenkeingriffs und/oder einer Bewarnung eines Fahrers ausgebildet ist. Dies ermöglicht eine sicherheitssteigernde Nutzung der vorhandenen Informationen und Daten.

Die vorliegende Erfindung betrifft des Weiteren eine Vorrichtung zur kommunikationssignalbasierten Positionsermittlung von Objekten im Straßenverkehr, welche eine Kommunikationseinheit zum kabellosen Empfangen und Senden von Daten transportierenden Kommunikationssignalen und zum kabellosen Empfangen von an Objekten reflektierten Reflektionssignalen der Kommunikationssignale umfasst sowie Standortbestimmungsmittel zur Bestimmung von Standorten von Absendern von Kommunikationssignalen und Eigenpostionsbestimmungsmittel zur Bestimmung einer Eigenposition der Vorrichtung umfasst. Die Vorrichtung zeichnet sich dadurch aus, dass die Vorrichtung weiterhin Laufzeitdifferenzbestimmungsmittel umfasst und dass die Vorrichtung das erfindungsgemäße Verfahren ausführt. Da das erfindungsgemäße System somit alle zur Ausführung des erfindungsgemäßen Verfahrens notwendigen Mittel umfasst und insbesondere das erfindungsgemäße Verfahren ausführt, ergeben sich hieraus die bereits beschriebenen Vorteile.

Es ist vorgesehen, dass die Vorrichtung weiterhin Dopplerfrequenzbestimmungsmittel zur Bestimmung von durch Relativbewegungen der Objekte zu einer Basislinie zwischen dem Empfänger und dem Absender erzeugten Dopplerfrequenzen umfasst. Die Dopplerfrequenz wird dabei insbesondere bevorzugt durch Mischen eines Kommunikationssignals mit seinem zugehörigen Reflektionssignal bestimmt. Entsprechend umfassen die Dopplerfrequenzbestimmungsmittel insbesondere bevorzugt einen Signalmischer sowie ganz besonders bevorzugt zusätzlich einen Tiefpass, insbesondere einen digitalen Tiefpass und ggf. ein Rechenmodul zum Rechnen von schnellen Fouriertransformationen.

Zweckmäßigerweise ist der Empfänger zudem für den Empfang von Breitbandsignalen ausgelegt und umfasst einen an sich bekannten Quadraturdemodulator. Der Quadraturdemodulator ermöglicht es, sich nähernde und sich entfernende Objekte durch das Vorzeichen der bestimmten Dopplerfrequenz zu unterscheiden.

Es ist vorgesehen, dass die Vorrichtung weiterhin Entfernungszuordnungsmittel umfasst, welche durch zeitliches Beobachten einer Änderung der Dopplerfrequenzen diesen jeweils eine relativgeschwindigkeitsabhängige Entfernungskurve zuordnen, deren Verläufe die Position des mindestens einen Objekts enthalten. Dies ermöglicht eine verbesserte Positionsermittlung eines Objekts, da somit zusätzliche Informationen, welche die Position des Objekts beschreiben, zur Verfügung stehen.

Vorteilhafterweise ist es vorgesehen, dass die Kommunikationseinheit zum gleichzeitigen Senden und Empfangen ausgeführt ist. Um ein gleichzeitiges Senden und Empfangen der Kommunikationseinheit zu gewährleisten, ist diese zweckmäßigerweise mit getrennten Sende- und Empfangsantennen versehen oder umfasst einen sogenannten, an sich bekannten Zirkulator oder einen Richtkoppler oder eine Ringleitung.

Gleichzeitiges Senden und Empfangen kann sowohl mittels eines Richtkopplers, eines Zirkulators, einer Ringleitung oder mittels getrennter Antennen für die Sendeeinheit und die Empfangseinheit realisiert werden. Sofern die Positionsermittlung mittels einer anderen, vom Empfänger nicht selbst zum Senden genutzten Kommunikationsgattung erfolgt, wie z.B. TV-Kommunikation, so werden in der Regel getrennte Antennen verwendet. Der Mehraufwand für die Fähigkeit zur Positionsermittlung gegenüber der reinen Kommunikationsfunktion ist vergleichsweise gering, da die Signalverarbeitung und die Auswertung zum größten Teil mit den für die Kommunikationsvorrichtung ohnehin benötigten Mitteln ausgeführt werden. Da zudem die Empfängerkomponenten größtenteils schon durch die Hauptanwendung, nämlich die Fahrzeug-zu-X-Kommunikation, bezahlt sind, ergibt sich nur ein vergleichsweise geringer Aufpreis.

Außerdem ist es vorgesehen, dass die Standortbestimmungsmittel elektronische Auswertemittel zum Auswerten mindestens eines Anteils der Daten sind und eine in den transportierten Daten enthaltene Standortbezeichnung des Absenders auswerten und/oder ein digitales Kartenmaterial enthaltender digitaler Speicher sind, in welchem eine Vielzahl von Standorten einer Vielzahl von Absendern bezeichnet sind. Somit stehen zwei unterschiedliche Möglichkeiten der Standortbestimmung zur Verfügung, welche besonders bevorzugt auch parallel genutzt werden. Die erstgenannte Möglichkeit der Standortbestimmung aus der in den transportierten Daten enthaltene Standortbezeichnung bietet dabei den Vorteil vergleichsweise großer Flexibilität und Kostengünstigkeit, da die empfangenen Daten in der Regel ohnehin ausgewertet werden. Die zweitgenannte Möglichkeit der Standortbestimmung über digitales Kartenmaterial hingegen ist unabhängig von zusätzlichen Informationen und somit nicht darauf angewiesen, dass der Absender seinen Standort in den vom Kommunikationssignal transportierten Daten beschreibt.

Bevorzugt ist es vorgesehen, dass die Eigenpostionsbestimmungsmittel ein globales Satellitennavigationssystem sind und/oder ein umfeldsensorbasiertes Karteneinpassungssystem sind. Globale Satellitennavigationssysteme, wie z.B. GPS, sind bereits weit verbreitet und in vielen Fahrzeugen serienmäßig vorhanden. Zudem sind diese Systeme vergleichsweise zuverlässig und genau. Eine Alternative hierzu stellen sogenannte Karteneinpassungssysteme, die auch als Map-Matching-Systeme bekannt sind, dar, welche mittels Umfeldsensoren ihre Umgebung identifizieren und somit die Eigenposition einer Ortsposition in digitalem Kartenmaterial zuordnen können. Besonders bevorzugt wird eine Kombination der beiden genannten Systeme genutzt, um die Zuverlässigkeit und Genauigkeit der bestimmten Eigenposition zu verbessern.

Die vorliegende Erfindung betrifft weiterhin eine Verwendung der erfindungsgemäßen Vorrichtung in einem Kraftfahrzeug.

Weitere bevorzugte Ausführungsformen ergeben sich aus den Unteransprüchen und der nachfolgenden Beschreibung eines Ausführungsbeispiels an Hand von Figuren.

Es zeigen
- Fig. 1: einen beispielhaften Aufbau einer erfindungsgemäßen Vorrichtung zur Ausführung des erfindungsgemäßen Verfahrens,
- Fig. 2: eine zeitliche Serie einer Vielzahl von sich verändernden Ellipsen und
- Fig. 3: eine Überlagerung einer relativgeschwindigkeitsabhängigen Entfernungskurve mit zwei Ellipsen.

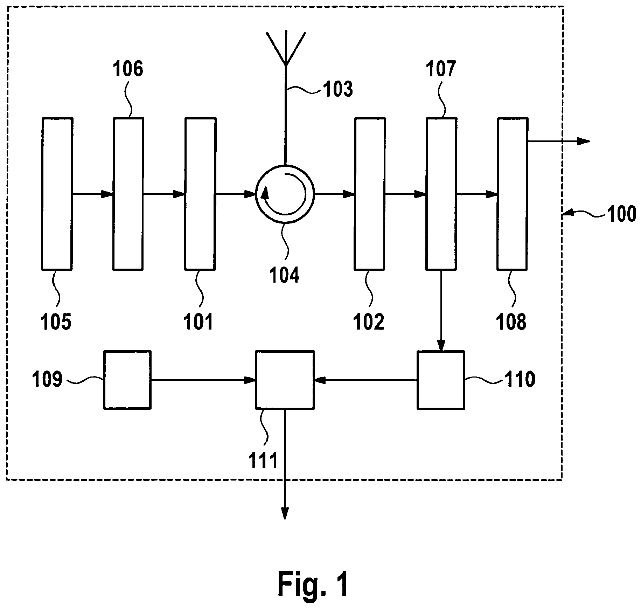

Fig. 1 zeigt einen ebenso beispielhaften wie schematischen Aufbau von erfindungsgemäßer Vorrichtung 100 zur kommunikationssignalbasierten Positionsermittlung von Objekten im Straßenverkehr. Vorrichtung 100 umfasst eine Kommunikationseinheit, welche aus Sendestufe 101 zum Senden von Kommunikationssignalen, Empfangsstufe 102 zum Empfangen von Kommunikationssignalen und Reflektionssignalen und Antenne 103, welche sowohl zum Senden als auch zum Empfangen genutzt wird, und Zirkulator 104 besteht. Antenne 103 ist über Zirkulator 104 sowohl mit Sendeeinheit 101 als auch mit Empfangseinheit 102 elektrisch verbunden. Mittels Zirkulator 104 kann Antenne 103 sowohl zum Senden als auch zum Empfangen von Informationen genutzt werden. Weiterhin umfasst Vorrichtung 100 Modulator 105 zum Modulieren von zu transportierenden Daten in ein zu sendendes Kommunikationssignal, Digital-Analog-Wandler 106 zum Wandeln von digitalen Daten in analoge Signale, Analog-Digital-Wandler 107 zum Wandeln von analogen Signalen in digitale Daten und Demodulator 108 zum demodulieren von empfangenen Kommunikationssignalen und Reflektionssignalen. Weiterhin umfasst Vorrichtung 100 Eigenpositionsbestimmungsmittel 109 in Form eines GPS-Sensors, Laufzeitdifferenzbestimmungsmittel 110 in Form einer elektronischen Recheneinheit zum Bestimmen einer Laufzeitdifferenz des Kommunikationssignals und des Reflektionssignals jeweils auf der Strecke vom Absender zum Empfänger und Standortbestimmungsmittel 111 zum Bestimmen einer Ellipse um den Absender und um den Empfänger, auf deren Umfangslinie die Position des das Reflektionssignal erzeugenden Objekts liegt. Standortbestimmungsmittel 111 sind ebenfalls als elektronische Recheneinheit ausgebildet. Vorrichtung 100 ist beispielsgemäß zur Kommunikation über WLAN nach IEEE802.11p ausgelegt, wobei sie über 2 jeweils 10 MHz Bandbreite aufweisende Kanäle kommuniziert, welche durch einen dritte, ungenutzten und ebenfalls 10 MHz Bandbreite aufweisenden Kanal getrennt sind.

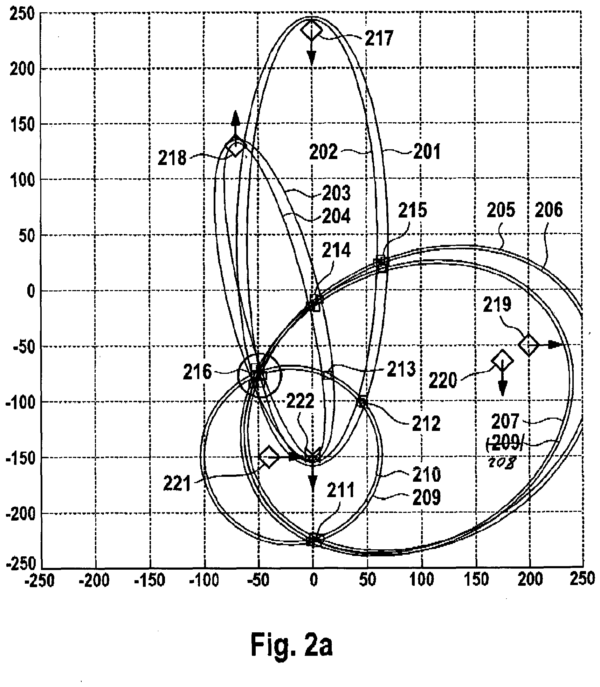

Fig. 2a zeigt Ellipsen 201 - 210, deren Schnittpunkte gemäß dem erfindungsgemäßen Verfahren mögliche Positionen von Objekten 211 - 216 beschreiben. In den jeweiligen Brennpunkten der Ellipsen liegen jeweils unterschiedliche Absender 217 - 221 sowie jeweils identischer Empfänger 222. Beispielsgemäß existiert nur Objekt 216 tatsächlich, während es sich bei Objekten 211 - 215 um sogenannte "Geisterziele" handelt, also in der Realität nicht existierende Objekte. Ob es sich bei Objekten 211 - 216 um tatsächliche Objekte oder Geisterziele handelt, ist dem Empfänger zum Zeitpunkt der Bestimmung von Ellipsen 201 - 210 jedoch noch nicht bekannt. Geisterziele können im weiteren Verlauf durch zeitliche Beobachtung der Schnittpunkte von Ellipsen 201 - 210 mittels statistischer Verfahren als solche erkannt werden. Da es sich bei Absendern 217 - 221 und bei Empfänger 222 um sich fortbewegende Fahrzeuge handelt, ist deren Geschwindigkeit jeweils durch einen in Fahrtrichtung zeigenden Pfeil dargestellt.

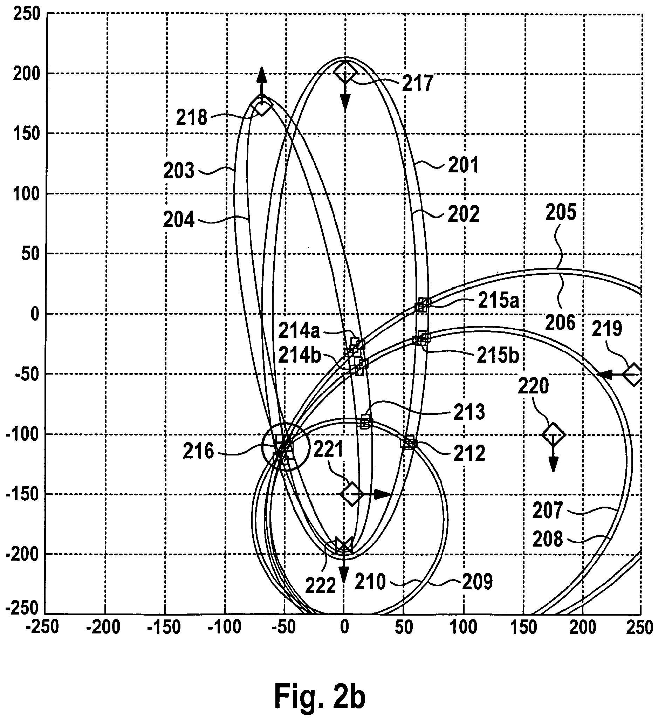

Fig. 2b stellt noch einmal die gleiche Situation wie Fig. 2a dar, jedoch nach Ablauf einer Zeitspanne von 1,5 s. Da es sich bei Absendern 217 - 221 um Fahrzeuge handelt, haben sich diese relativ zu Empfänger 222, der ebenfalls ein Fahrzeug ist, bewegt. Entsprechend hat eine Verschiebung der Ellipsen stattgefunden, welche auch zu einer Verschiebung der Positionen der Schnittpunkte und damit zu einer Verschiebung der Positionen von möglichen Objekten 211 - 216 geführt hat. Wie zu sehen ist, haben sich Geisterziele 213 und 214 in jeweils zwei Geisterziele 213a, 213b und 214a, 214b aufgespalten.

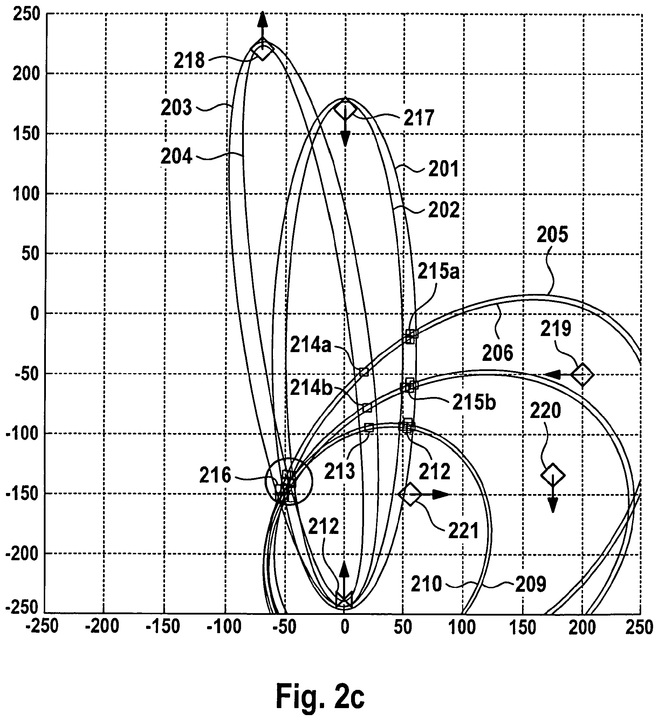

In Fig. 2c ist nochmals die bereits beschriebene Situation zu sehen, diesmal jedoch nach nochmaligem Ablauf einer zusätzlichen Zeitdauer von 1,5 s. Da Geisterziele 212, 213, 214a, 214b, 215a und 215b ein ungewöhnliches Bewegungsverhalten aufweisen und sich ihre Position zudem keinem in einer digitalen Karte hinterlegtem Straßenverlauf zuordnen lässt, werden sie als Geisterziele erkannt und verworfen.

Tatsächlich existierendes Objekt 216 hingegen weist ein gleichmäßiges, für Fahrzeuge typisches Bewegungsverhalten auf und lässt sich einem in einer digitalen Karte hinterlegtem Straßenverlauf zuordnen. Somit wird Objekt 216 als tatsächlich existierend erkannt.

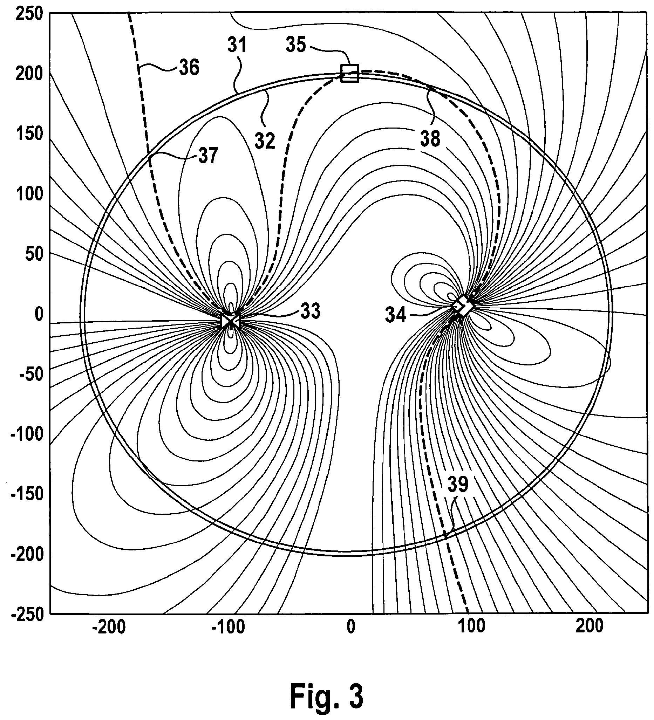

Fig. 3 zeigt eine Überlagerung einer relativgeschwindigkeitsabhängigen Entfernungskurve 36 mit zwei Ellipsen 31 und 32, welche beispielsgemäß nahezu kreisförmig ausgebildet sind. Empfänger 33 liegt in einem ersten Brennpunkt von Ellipsen 31 und 32, während Absender 34 in einem zweiten Brennpunkt von Ellipsen 31 und 32 liegt. Die in Fig. 3 weiß dargestellten Linien sind Linien gleicher Dopplerfrequenz. Eine von Empfänger 33 gemessene Dopplerfrequenz verringert sich mit zunehmender Annäherung an Objekt 35, durchläuft einen Nulldurchgang beim Passieren von Objekt 35 und wächst mit negativem Vorzeichen bei anschließend wieder zunehmender Entfernung zu Zielobjekt 35. Entfernungskurve 36 schneidet Ellipsen 31 und 32 an vier stellen 35, 37, 38 und 39. Somit kennt Empfänger 33 vier mögliche Positionen von Objekt 35. Diese Mehrdeutigkeit der Position von Objekt 35 kann Empfänger 35 durch zeitliches Beobachten des Bewegungsverhaltens von Objekt 35 auflösen und so die tatsächliche Position von Objekt 35 ermitteln.

Gemäß einem weiteren, nicht dargestellten Ausführungsbeispiel umfasst die erfindungsgemäße Vorrichtung zumindest eine Breitbandempfangseinheit in Form eines analogen Fernsehempfängers mit 5 MHz Bandbreite am Basisband-Ausgang. Durch einen Frequenzwechsel über verschiedene Sender hinweg kann eine Karte mit den Positionen der Objekte erstellt werden. Vergleichsweise gut sind hierfür sogenannte Inflektoren als Objekte geeignet, da sie die Kommunikationssignale über vergleichsweise weite Entfernungen reflektieren. Reine Rückreflektionen hingegen erreichen den Empfänger in diesem Fall oftmals nicht mehr. Die Objekte liegen auf den Schnittpunkten von Ellipsen, in deren einem Brennpunkt der Empfänger und in deren anderem Brennpunkt der jeweilige Absender steht. Die Unterscheidung der tatsächlich existierenden Objekte von den Geisterzielen findet über zeitliche Beobachtung und sogenannte Markov-Bewegungsmodelle statt. Wenn sich die Position bzw. der Standort von Absender, Empfänger oder Objekt ändert, können die Geisterziele von echten Objekten unterschieden werden.

## Patentansprüche

1. Verfahren zur kommunikationssignalbasierten Positionsermittlung von Objekten im Straßenverkehr, bei welchem mindestens ein Daten transportierendes Kommunikationssignal von mindestens einem Absender (217, 218, 219, 220, 221, 34) kabellos gesendet wird, wobei das mindestens eine Kommunikationssignal an mindestens einem Objekt (211, 212, 213, 214, 215, 216, 35) zumindest anteilig als Reflektionssignal reflektiert wird, wobei von einem Empfänger (222, 33) das mindestens eine Kommunikationssignal und das Reflektionssignal empfangen werden und wobei der Empfänger (222, 33) seine Eigenposition und einen Standort des mindestens einen Absenders (217, 218, 219, 220, 221, 34) kennt,
wobei vom (222, 33) Empfänger eine Laufzeitdifferenz des Kommunikationssignals und des Reflektionssignals bestimmt wird,
wobei vom Empfänger (222, 33) aus dem mindestens einen Kommunikationssignal und dem Reflektionssignal eine durch eine Relativbewegung des Objekts (211, 212, 213, 214, 215, 216, 35) zu einer Basislinie zwischen dem Empfänger (222, 33) und dem Absender (217, 218, 219, 220, 221, 34) erzeugte Dopplerfrequenz bestimmt wird,
**dadurch gekennzeichnet, dass** vom Empfänger (222, 33) durch zeitliches Beobachten einer Änderung der Dopplerfrequenz dieser eine relativgeschwindigkeitsabhängige Entfernungskurve (36) zugeordnet wird, deren Verlauf die Position des mindestens einen Objekts (211, 212, 213, 214, 215, 216, 35) enthält.

2. Verfahren nach Anspruch 1,
**dadurch gekennzeichnet, dass** aus der Laufzeitdifferenz, der Eigenposition und dem Standort eine Ellipse (201, 202, 203, 204, 205, 206, 207, 208, 209, 210, 31, 32) bestimmt wird, deren Umfangslinie eine Position des mindestens einen Objekts (211, 212, 213, 214, 215, 216, 35) enthält.

3. Verfahren nach mindestens einem der Ansprüche 1 oder 2,
**dadurch gekennzeichnet, dass** die mindestens eine Dopplerfrequenz durch Mischen des mindestens einen Kommunikationssignals mit dem zugehörigen Reflektionssignal bestimmt wird.

4. Verfahren nach Anspruch 3,
**dadurch gekennzeichnet, dass** die Dopplerfrequenz mittels eines Tiefpasses, insbesondere mittels eines digitalen Tiefpasses, gefiltert wird.

5. Verfahren nach einem der vorstehenden Ansprüche,
**dadurch gekennzeichnet, dass** die Änderung der Dopplerfrequenz mittels einer schnellen Fouriertransformation der relativgeschwindigkeitsabhängigen Entfernungskurve (36) zugeordnet wird.

6. Verfahren nach mindestens einem der vorhergehenden Ansprüche,
**dadurch gekennzeichnet, dass** auch der Empfänger (222, 33) zum Senden von Daten transportierenden Kommunikationssignalen befähigt ist.

7. Verfahren nach mindestens einem der vorhergehenden Ansprüche,
**dadurch gekennzeichnet, dass** bei einer Vielzahl von Absendern (217, 218, 219, 220, 221, 34) und einer Vielzahl von Kommunikationssignalen, welche am mindestens einen Objekt (211, 212, 213, 214, 215, 216, 35) jeweils zumindest anteilig als eine Vielzahl von Reflektionssignalen reflektiert werden, vom Empfänger (222, 33) jeweils ein Vielzahl von Laufzeitdifferenzen aus der Vielzahl von Kommunikationssignalen und den zugehörigen Reflektionssignalen bestimmt wird.

8. Verfahren nach Anspruch 7,
**dadurch gekennzeichnet, dass** vom Empfänger (222, 33) aus der Vielzahl von Laufzeitdifferenzen eine Vielzahl von Ellipsen (201, 202, 203, 204, 205, 206, 207, 208, 209, 210, 31, 32) bestimmt wird, wobei mindestens ein Schnittpunkt der Vielzahl von Ellipsen (201, 202, 203, 204, 205, 206, 207, 208, 209, 210, 31, 32) die Position des mindestens einen Objekts (211, 212, 213, 214, 215, 216, 35) enthält.

9. Verfahren nach mindestens einem der vorhergehenden Ansprüche,
**dadurch gekennzeichnet, dass** das Verfahren von einer Vielzahl von Empfängern (222, 33) ausgeführt wird, wobei die Empfänger (222, 33) mittels der Kommunikationssignale untereinander die Schnittpunkte beschreibende Daten austauschen.

10. Verfahren nach Anspruch 7 oder einem davon abhängigen Anspruch,
**dadurch gekennzeichnet, dass** vom Empfänger (222, 33) aus der Vielzahl von Kommunikationssignalen und der Vielzahl von Reflektionssignalen durch eine Vielzahl von Relativbewegungen einer Vielzahl von Objekten (211, 212, 213, 214, 215, 216, 35) zu einer Basislinie zwischen dem Empfänger (222, 33) und dem Absender (217, 218, 219, 220, 221, 34) eine Vielzahl von erzeugten Dopplerfrequenzen bestimmt wird.

11. Verfahren nach Anspruch 10,
**dadurch gekennzeichnet, dass** vom Empfänger (222, 33) durch zeitliches Beobachten von Änderungen der Vielzahl von Dopplerfrequenzen der Vielzahl von Dopplerfrequenzen jeweils eine relativgeschwindigkeitsabhängige Entfernungskurve (36) zugeordnet wird, deren Verläufe die Position des mindestens einen Objekts (211, 212, 213, 214, 215, 216, 35) enthalten.

12. Verfahren nach Anspruch 2 oder einem davon abhängigen Anspruch,
**dadurch gekennzeichnet, dass** die mindestens eine relativgeschwindigkeitsabhängige Entfernungskurve (36) und die mindestens eine Ellipse (201, 202, 203, 204, 205, 206, 207, 208, 209, 210, 31, 32) auf einer digitalen Positionskarte überlagert werden, wobei die Schnittpunkte der mindestens einen relativgeschwindigkeitsabhängigen Entfernungskurve und der mindestens einen Ellipse (201, 202, 203, 204, 205, 206, 207, 208, 209, 210, 31, 32) die Position des mindestens einen Objekts (211, 212, 213, 214, 215, 216, 35) enthalten.

13. Verfahren nach Anspruch 12,
**dadurch gekennzeichnet, dass** die mindestens eine relativgeschwindigkeitsabhängige Entfernungskurve (36) einer in digitalem Kartenmaterial enthaltenen Straßenkarte überlagert wird, wobei die mindestens eine Position des mindestens einen Objekts (211, 212, 213, 214, 215, 216, 35) ausschließlich einer in der digitalen Straßenkarte verzeichneten Straße zugeordnet wird.

14. Verfahren nach Anspruch 12,
**dadurch gekennzeichnet, dass** die mindestens eine Ellipse (201, 202, 203, 204, 205, 206, 207, 208, 209, 210, 31, 32) einer in digitalem Kartenmaterial enthaltenen Straßenkarte überlagert wird, wobei die mindestens eine Position des mindestens einen Objekts (211, 212, 213, 214, 215, 216, 35) ausschließlich einer in der digitalen Straßenkarte verzeichneten Straße zugeordnet wird.

15. Verfahren nach mindestens einem der Ansprüche 13 oder 14,
**dadurch gekennzeichnet, dass** der Standort des mindestens einen Absenders (217, 218, 219, 220, 221, 34) dem digitalen Kartenmaterial entnommen wird.

16. Verfahren nach Anspruch 7 oder einem davon abhängigen Anspruch,
**dadurch gekennzeichnet, dass** die in der Vielzahl von Kommunikationssignalen transportierten Daten vom Empfänger (222, 33) zumindest anteilig ausgewertet werden.

17. Verfahren nach mindestens einem der vorhergehenden Ansprüche,
**dadurch gekennzeichnet, dass** der Standort des mindestens einen Absenders (217, 218, 219, 220, 221, 34) und/oder des Empfängers (222, 33) in den vom Kommunikationssignal transportierten Daten enthalten ist.

18. Verfahren nach Anspruch 17,
**dadurch gekennzeichnet, dass** die transportierten Daten und/oder die bestimmten Positionen an mindestens ein Fahrerassistenzsystem weitergeführt werden.

19. Verfahren nach Anspruch 18,
**dadurch gekennzeichnet, dass** das Fahrerassistenzsystem zur Ausführung eines autonomen Bremseneingriffs und/oder eines autonomen Lenkeingriffs und/oder einer Bewarnung eines Fahrers ausgebildet ist.

20. Vorrichtung zur kommunikationssignalbasierten Positionsermittlung von Objekten im Straßenverkehr (100), umfassend eine Kommunikationseinheit zum kabellosen Empfangen und Senden von Daten transportierenden Kommunikationssignalen und zum kabellosen Empfangen von an Objekten (211, 212, 213, 214, 215, 216, 35) reflektierten Reflektionssignalen der Kommunikationssignale, Standortbestimmungsmittel (111) zur Bestimmung von Standorten von Absendern (217, 218, 219, 220, 221, 34) von Kommunikationssignalen und Eigenpostionsbestimmungsmittel (109) zur Bestimmung einer Eigenposition der Vorrichtung,
wobei die Vorrichtung (100) weiterhin Dopplerfrequenzbestimmungsmittel zur Bestimmung von durch Relativbewegungen der Objekte (211, 212, 213, 214, 215, 216, 35) zu einer Basislinie zwischen dem Empfänger (222, 33) und dem Absender (217, 218, 219, 220, 221, 34) erzeugten Dopplerfrequenzen umfasst, wobei die Vorrichtung (100) weiterhin Entfernungszuordnungsmittel umfasst, welche durch zeitliches Beobachten einer Änderung der Dopplerfrequenzen diesen jeweils eine relativgeschwindigkeitsabhängige Entfernungskurve (36) zuordnen, deren Verläufe die Position des mindestens einen Objekts (211, 212, 213, 214, 215, 216, 35) enthalten,
**dadurch gekennzeichnet, dass** die Vorrichtung (100) weiterhin Laufzeitdifferenzbestimmungsmittel (110) umfasst und dass die Vorrichtung (100) ein Verfahren nach mindestens einem der Ansprüche 1 bis 19 ausführt.

21. Vorrichtung nach Anspruch 20,
**dadurch gekennzeichnet, dass** die Kommunikationseinheit zum gleichzeitigen Senden und Empfangen ausgeführt ist.

22. Vorrichtung nach mindestens einem der Ansprüche 20 oder 21,
**dadurch gekennzeichnet, dass** die Standortbestimmungsmittel (111) elektronische Auswertemittel zum Auswerten mindestens eines Anteils der Daten sind und eine in den transportierten Daten enthaltene Standortbezeichnung des Absenders (217, 218, 219, 220, 221, 34) auswerten und/oder ein digitales Kartenmaterial enthaltender digitaler Speicher sind, in welchem eine Vielzahl von Standorten einer Vielzahl von Absendern (217, 218, 219, 220, 221, 34) bezeichnet sind.

23. Verwendung der Vorrichtung (100) nach mindestens einem der Ansprüche 20 bis 22 in einem Kraftfahrzeug.

## Claims

1. A method for the position determination of objects in road traffic, based on communication signals, in which at least one data-transporting communication signal is wirelessly transmitted from at least one sender (217, 218, 219, 220, 221, 34), wherein the at least one communication signal is reflected at least partially as a reflection signal on at least one object (211, 212, 213, 214, 215, 216, 35), wherein the at least one communication signal and the reflection signal are received by a receiver (222, 33) and wherein the receiver (222, 33) knows its own position and a location of the at least one sender (217, 218, 219, 220, 221, 34), wherein a propagation time difference of the communication signal and the reflection signal is established by the receiver (222, 33),
wherein a Doppler frequency produced by a relative movement of the object (211, 212, 213, 214, 215, 216, 35) with respect to a baseline between the receiver (222, 33) and the sender (217, 218, 219, 220, 221, 34) is established by the receiver (222, 33) from the at least one communication signal and the reflection signal,
**characterized in that**, by means of a temporal observation of a change in the Doppler frequency, a relative speed-dependent distance curve (36) is assigned thereto by the receiver (222, 33), the course of which relative speed-dependent distance curve contains the position of the at least one object (211, 212, 213, 214, 215, 216, 35).

2. The method according to Claim 1,
**characterized in that** an ellipse (201, 202, 203, 204, 205, 206, 207, 208, 209, 210, 31, 32) is established from the propagation time difference, the own position and the location, the circumferential line of which ellipse contains a position of the at least one object (211, 212, 213, 214, 215, 216, 35).

3. The method according to at least one of Claims 1 or 2,
**characterized in that** the at least one Doppler frequency is established by mixing the at least one communication signal with the associated reflection signal.

4. The method according to Claim 3,
**characterized in that** the Doppler frequency is filtered by means of a low-pass, in particular by means of a digital low-pass.

5. The method according to any one of the preceding claims,
**characterized in that** the change in the Doppler frequency is assigned by means of a fast Fourier transform to the relative speed-dependent distance curve (36).

6. The method according to at least one of the preceding claims,
**characterized in that** the receiver (222, 33) is also able to send data-transporting communication signals.

7. The method according to at least one of the preceding claims,
**characterized in that** in the event of a plurality of senders (217, 218, 219, 220, 221, 34) and a plurality of communication signals, which are reflected in each case at least partially as a plurality of reflection signals on at least one object (211, 212, 213, 214, 215, 216, 35), a plurality of propagation time differences is, in each case, established from the plurality of communication signals and the associated reflection signals by the receiver (222, 33).

8. The method according to Claim 7,
**characterized in that** a plurality of ellipses (201, 202, 203, 204, 205, 206, 207, 208, 209, 210, 31, 32) is established by the receiver (222, 33) from the plurality of propagation time differences, wherein at least one intersection of the plurality of ellipses (201, 202, 203, 204, 205, 206, 207, 208, 209, 210, 31, 32) contains the position of the at least one object (211, 212, 213, 214, 215, 216, 35).

9. The method according to at least one of the preceding claims,
**characterized in that** the method is carried out by a plurality of receivers (222, 33), wherein the receivers (222, 33) exchange data describing the intersections among each other by means of the communication signals.

10. The method according to Claim 7 or a claim dependent thereon,
**characterized in that** a plurality of produced Doppler frequencies is established by the receiver (222, 33) from the plurality of communication signals and the plurality of reflection signals by a plurality of relative movements of a plurality of objects (211, 212, 213, 214, 215, 216, 35) with respect to a baseline between the receiver (222, 33) and the sender (217, 218, 219, 220, 221, 34).

11. The method according to Claim 10,
**characterized in that**, by means of a temporal observation of changes in the plurality of Doppler frequencies, a relative speed-dependent distance curve (36) is assigned in each case by the receiver (222, 33) to the plurality of Doppler frequencies, the courses of which relative speed-dependent distance curve contain the position of the at least one object (211, 212, 213, 214, 215, 216, 35).

12. The method according to Claim 2 or a claim dependent thereon,
**characterized in that** the at least one relative speed-dependent distance curve (36) and the at least one ellipse (201, 202, 203, 204, 205, 206, 207, 208, 209, 210, 31, 32) are superimposed on a digital position map, wherein the intersections of the at least one relative speed-dependent distance curve and the at least one ellipse (201, 202, 203, 204, 205, 206, 207, 208, 209, 210, 31, 32) contain the position of the at least one object (211, 212, 213, 214, 215, 216, 35).

13. The method according to Claim 12,
**characterized in that** the at least one relative speed-dependent distance curve (36) is superimposed on a road map contained in digital mapping material, wherein the at least one position of the at least one object (211, 212, 213, 214, 215, 216, 35) is exclusively assigned to a road recorded in the digital road map.

14. The method according to Claim 12,
**characterized in that** the at least one ellipse (201, 202, 203, 204, 205, 206, 207, 208, 209, 210, 31, 32) is superimposed on a road map contained in digital mapping material, wherein the at least one position of the at least one object (211, 212, 213, 214, 215, 216, 35) is exclusively assigned to a road recorded in the digital road map.

15. The method according to at least one of Claims 13 or 14,
**characterized in that** the location of the at least one sender (217, 218, 219, 220, 221, 34) is inferred from the digital mapping material.

16. The method according to Claim 7 or a claim dependent thereon,
**characterized in that** the data transported in the plurality of communication signals are at least partially evaluated by the receiver (222, 33).

17. The method according to at least one of the preceding claims,
**characterized in that** the location of the at least one sender (217, 218, 219, 220, 221, 34) and/or of the receiver (222, 33) is contained in the data transported by the communication signal.

18. The method according to Claim 17,
**characterized in that** the transported data and/or the established positions are forwarded to at least one driver assistance system.

19. The method according to Claim 18,
**characterized in that** the driver assistance system is configured to carry out an autonomous braking intervention and/or an autonomous steering intervention, and/or to warn a driver.

20. A device for the position determination of objects in road traffic (100), based on communication signals, comprising a communication unit for wirelessly receiving and transmitting data-transporting communication signals and for wirelessly receiving reflection signals of the communication signals reflected on objects (211, 212, 213, 214, 215, 216, 35), location establishment means (111) for establishing locations of senders (217, 218, 219, 220, 221, 34) from communication signals, and own position establishment means (109) for establishing the own position of the device,
wherein the device (100) further comprises Doppler frequency establishment means for establishing Doppler frequencies produced by relative movements of the objects (211, 212, 213, 214, 215, 216, 35) with respect to a baseline between the receiver (222, 33) and the sender (217, 218, 219, 220, 221, 34), wherein the device (100) further comprises distance assignment means, which, by means of a temporal observation of a change in the Doppler frequencies, assign a relative speed-dependent distance curve (36) thereto in each case, the courses of which relative speed-dependent distance curve contain the position of the at least one object (211, 212, 213, 214, 215, 216, 35),
**characterized in that** the device (100) further comprises propagation time difference establishment means (110), and the device (100) carries out a method according to at least one of Claims 1 to 19.

21. The device according to Claim 20,
**characterized in that** the communication unit is designed to transmit and receive simultaneously.

22. The device according to at least one of Claims 20 or 21,
**characterized in that** the location establishment means (111) are electronic evaluation means for evaluating at least a proportion of the data and evaluate a location designation of the sender (217, 218, 219, 220, 221, 34) which is contained in the transported data, and/or are a digital memory containing digital mapping material, in which digital memory a plurality of locations of a plurality of senders (217, 218, 219, 220, 221, 34) is designated.

23. Use of the device (100) according to at least one of Claims 20 to 22 in a motor vehicle.

## Revendications

1. Procédé pour la détermination de la position d'objets dans la circulation routière sur la base de signaux de communication, où au moins un signal de communication transportant des données est transmis sans fil par au moins un émetteur (217, 218, 219, 220, 221, 34), où ledit au moins un signal de communication est réfléchi sur au moins un objet (211, 212, 213, 214, 215, 216, 35) au moins en partie en tant que signal de réflexion, où ledit au moins un signal de communication et le signal de réflexion sont reçus par un récepteur (222, 33) et où le récepteur (222, 33) connaît sa position propre et une localisation dudit au moins un émetteur (217, 218, 219, 220, 221, 34),
où une différence de temps de propagation du signal de communication et du signal de réflexion est déterminée par le récepteur (222, 33),
où une fréquence Doppler générée par un déplacement relatif de l'objet (211, 212, 213, 214, 215, 216, 35) vers une ligne de base entre le récepteur (222, 33) et l'émetteur (217, 218, 219, 220, 221, 34) est déterminée par le récepteur (222, 33) à partir dudit au moins un signal de communication et du signal de réflexion,
**caractérisé en ce qu'**une courbe d'éloignement (36) dépendante de la vitesse relative est associée par le récepteur (222, 33) à une fréquence Doppler par observation de la variation de celle-ci dans le temps, dont le tracé comprend la position dudit au moins un objet (211, 212, 213, 214, 215, 216, 35).

2. Procédé selon la revendication 1,
**caractérisé en ce qu'**une ellipse (201, 202, 203, 204, 205, 206, 207, 208, 209, 210, 31, 32) est déterminée à partir de la différence de temps de propagation, de la position propre et de la localisation, dont la circonférence comprend une position dudit au moins un objet (211, 212, 213, 214, 215, 216, 35).

3. Procédé selon au moins une des revendications 1 ou 2,
**caractérisé en ce que** ladite au moins une fréquence Doppler est déterminée par mélange dudit au moins un signal de communication avec le signal de réflexion correspondant.

4. Procédé selon la revendication 3,
**caractérisé en ce que** la fréquence Doppler est filtrée au moyen d'un filtre passe-bas, en particulier au moyen d'un filtre passe-bas numérique.

5. Procédé selon l'une quelconque des revendications précédentes,
**caractérisé en ce que** la variation de la fréquence Doppler est associée à la courbe d'éloignement (36) dépendante de la vitesse relative au moyen d'une transformation de Fourier rapide.

6. Procédé selon au moins une des revendications précédentes,
**caractérisé en ce que** le récepteur (222, 33) est également apte à émettre des signaux de communication transportant des données.

7. Procédé selon au moins une des revendications précédentes,
**caractérisé en ce que** pour une pluralité d'émetteurs (217, 218, 219, 220, 221, 34) et une pluralité de signaux de communication réfléchis sur au moins un objet (211, 212, 213, 214, 215, 216, 35) au moins en partie en tant que pluralité de signaux de réflexion, une pluralité de différences de temps de propagation est déterminée par le récepteur (222, 33) à partir de la pluralité de signaux de communication et des signaux de réflexion correspondants.

8. Procédé selon la revendication 7,
**caractérisé en ce qu'**une pluralité d'ellipses (201, 202, 203, 204, 205, 206, 207, 208, 209, 210, 31, 32) est déterminée par le récepteur (222, 33) à partir de la pluralité de différences de temps de propagation, au moins un point d'intersection de la pluralité d'ellipses (201, 202, 203, 204, 205, 206, 207, 208, 209, 210, 31, 32) comprenant la position dudit au moins un objet (211, 212, 213, 214, 215, 216, 35).

9. Procédé selon au moins une des revendications précédentes,
**caractérisé en ce que** ledit procédé est exécuté par une pluralité de récepteurs (222, 33), lesdits récepteurs (222, 33) échangeant entre eux des données descriptives des points d'intersection au moyen des signaux de communication.

10. Procédé selon la revendication 7 ou une revendication dépendante de celle-ci,
**caractérisé en ce qu'**une pluralité de fréquences Doppler générées est déterminée par le récepteur (222, 33) à partir de la pluralité de signaux de communication et de la pluralité de signaux de réflexion par une pluralité de déplacements relatifs d'une pluralité d'objets (211, 212, 213, 214, 215, 216, 35) vers une ligne de base entre le récepteur (222, 33) et l'émetteur (217, 218, 219, 220, 221, 34).

11. Procédé selon la revendication 10,
**caractérisé en ce qu'**une courbe d'éloignement (36) dépendante de la vitesse relative est associée par le récepteur (222, 33) à chacune des fréquences de la pluralité de fréquences Doppler par observation dans le temps des variations de celles-ci, dont le tracé comprend la position dudit au moins un objet (211, 212, 213, 214, 215, 216, 35).

12. Procédé selon la revendication 2 ou une revendication dépendante de celle-ci,
**caractérisé en ce que** ladite au moins une courbe d'éloignement (36) dépendante de la vitesse relative et ladite au moins une ellipse (201, 202, 203, 204, 205, 206, 207, 208, 209, 210, 31, 32) sont superposées sur une carte de position numérique, les points d'intersection de ladite au moins une courbe d'éloignement dépendante de la vitesse relative et de ladite au moins une ellipse (201, 202, 203, 204, 205, 206, 207, 208, 209, 210, 31, 32) comprenant la position dudit au moins un objet (211, 212, 213, 214, 215, 216, 35).

13. Procédé selon la revendication 12,
**caractérisé en ce que** ladite au moins une courbe d'éloignement (36) dépendante de la vitesse relative est superposée à une carte routière contenue dans un matériau cartographique numérique, ladite au moins une position dudit au moins un objet (211, 212, 213, 214, 215, 216, 35) étant associée exclusivement à une route enregistrée dans la carte routière.

14. Procédé selon la revendication 12,
**caractérisé en ce que** ladite au moins une ellipse (201, 202, 203, 204, 205, 206, 207, 208, 209, 210, 31, 32) est superposée à une carte routière contenue dans un matériau cartographique numérique, ladite au moins une position dudit au moins un objet (211, 212, 213, 214, 215, 216, 35) étant associée exclusivement à une route enregistrée dans la carte routière.

15. Procédé selon au moins une des revendications 13 ou 14, **caractérisé en ce que** la localisation dudit au moins un émetteur (217, 218, 219, 220, 221, 34) est extraite du matériau cartographique numérique.

16. Procédé selon la revendication 7 ou une revendication dépendante de celle-ci,
**caractérisé en ce que** les données transportées dans la pluralité de signaux de communication sont analysées au moins en partie par le récepteur (222, 33).

17. Procédé selon au moins une des revendications précédentes,
**caractérisé en ce que** la localisation dudit au moins un émetteur (217, 218, 219, 220, 221, 34) et/ou du récepteur (222, 33) est contenue dans les données transportées par le signal de communication.

18. Procédé selon la revendication 17,
**caractérisé en ce que** les données transportées et/ou les positions déterminées sont transmises à au moins un système d'assistance au conducteur.

19. Procédé selon la revendication 18,
**caractérisé en ce que** le système d'assistance au conducteur est prévu pour effectuer une intervention de freinage autonome et/ou une intervention de conduite autonome et/ou un avertissement d'un conducteur.

20. Dispositif pour la détermination de la position d'objets dans la circulation routière (100) sur la base de signaux de communication, comprenant une unité de communication pour la réception et l'émission sans fil de signaux de communication transportant des données et pour la réception sans fil de signaux de réflexion des signaux de communication réfléchis sur des objets (211, 212, 213, 214, 215, 216, 35), un moyen de détermination de localisation (111) pour la détermination de localisations d'émetteurs (217, 218, 219, 220, 221, 34) de signaux de communication et un moyen de détermination de position propre (109) pour la détermination d'une position propre du dispositif,
où le dispositif (100) comprend en outre un moyen de détermination de fréquence Doppler pour la détermination de fréquences Doppler générées par des déplacements relatifs des objets (211, 212, 213, 214, 215, 216, 35) vers une ligne de base entre le récepteur (222, 33) et l'émetteur (217, 218, 219, 220, 221, 34),
où le dispositif (100) comprend en outre un moyen d'association d'éloignement associant à chacune des fréquences Doppler une courbe d'éloignement (36) dépendante de la vitesse relative par observation d'une variation de celles-ci dans le temps, dont le tracé comprend la position dudit au moins un objet (211, 212, 213, 214, 215, 216, 35), **caractérisé en ce que** ledit dispositif (100) comprend en outre un moyen de détermination de différence de temps de propagation (110) et **en ce que** ledit dispositif (100) exécute un procédé selon au moins une des revendications 1 à 19.

21. Dispositif selon la revendication 20,
**caractérisé en ce que** l'unité de communication est réalisée pour une émission et une réception simultanées.

22. Dispositif selon au moins une des revendications 20 ou 21,
**caractérisé en ce que** le moyen de détermination de localisation (111) est un moyen électronique d'analyse destiné à analyser au moins une partie des données et analyse une indication de localisation de l'émetteur (217, 218, 219, 220, 221, 34) contenue dans les données transportées et/ou est une mémoire numérique contenant un matériau cartographique numérique, où est enregistrée une pluralité de localisations d'une pluralité d'émetteurs (217, 218, 219, 220, 221, 34).

23. Utilisation du dispositif (100) selon au moins une des revendications 20 à 22 dans un véhicule automobile.
